# EUROPÄISCHE PATENTSCHRIFT

(11) **EP 0 572 632 B1**
(45) Veröffentlichungstag und Bekanntmachung des Hinweises auf die Patenterteilung: **03.04.1996**
(21) Anmeldenummer: 93901672.1
(22) Anmeldetag: 09.12.1992
(51) Int. Cl.: F16D 65/00

(54) **FAHRZEUGBREMSE MIT SCHMUTZBLECH UND HERSTELLUNGSVERFAHREN**
VEHICLE BRAKE WITH DIRT SHIELD AND PROCESS FOR MANUFACTURING THE SAME
FREIN DE VEHICULE A GARDE-BOUE ET SON PROCEDE DE FABRICATION

(30) Priorität: 18.12.1991 DE 4141700
(43) Veröffentlichungstag der Anmeldung: 08.12.1993
(73) Patentinhaber: ITT Automotive Europe GmbH, D-60488 Frankfurt (DE)
(72) Erfinder: MUSOLF, Jürgen, D-6000 Frankfurt/Main 1 (DE); STRÜTT, Achim, D-6068 Riedstadt-Goddelau (DE)
(74) Vertreter: Portwich, Peter
(86) Internationale Anmeldenummer: EP9202839
(87) Internationale Veröffentlichungsnummer: WO9312357

(56) Entgegenhaltungen:
- EP-A- 0 124 419
- DE-B- 1 228 520
- DE-C- 846 963
- GB-A- 689 017
- GB-A- 1 424 192

## Beschreibung

Die Erfindung betrifft eine Fahrzeugbremse mit einer als Betriebsbremse dienenden Scheibenbremse, einer als Feststellbremse dienenden Trommelbremse und einem an einem Bremsträger befestigten Schmutzblech, gemäß dem Oberbegriff des Patentanspruchs 1.

Aus der DE PS 12 28 520 ist eine gattungsgemäße Fahrzeugbremse bekannt. Bei dieser bekannten Fahrzeugbremse erstreckt sich das Schmutzblech zwischen dem Bremsträger und einem Flansch des Achschenkels des Fahrzeuges, wo es eingeklemmt wird, wenn man den Bremsträger am Flansch festschraubt. Da das Schmutzblech erst bei der Montage der Bremse im Fahrzeug unverlierbar befestigt wird, kann die Fahrzeugbremse nicht als fertigmontierte Einheit geliefert werden. Es wäre zwar möglich, das Schmutzblech durch zusätzliche Schrauben am Bremsträger zu befestigen, jedoch würde sich eine solche Maßnahme nachteilig auf die Fertigungs- und Montagekosten auswirken. Es ist auch möglich, das Schmutzblech durch Preßsitz an einer radial äußeren Umfangsfläche des Bremsträgers zu befestigen. Diese Befestigung hat jedoch den Nachteil, daß sich das Schmutzblech im Fahrbetrieb lockern kann, wenn sich der Bremsträger und das Schmutzblech unter Wärmeeinwirkung unterschiedlich stark ausdehnen. Bei der üblichen Ausgestaltung des Bremsträgers als Gußteil und des Schmutzbleches als Stanzteil ist dies der Fall.

Aus der EP-A-O 124 419 ist eine Trommelbremse bekannt, bei der ein Schmutzblech einen radial inneren Bund aufweist, der an einem radial äußeren Bund eines Bremsträgerbleches befestigt ist, indem widerhakenartige Ausprägungen des Schmutzbleches in ausgestanzte Durchbrüche des Bremsträgerblechs eingerastet sind. Diese Ausführungsform eignet sich weniger gut für gegossene Bremsträger. Des weiteren ist die Fertigung einer Vielzahl von Ausprägungen und Durchbrüchen aufwendig. Schließlich kann das bekannte Schmutzblech aufgrund eines konstruktionsbedingten Spiels in seiner Befestigung klappern.

Aufgabe der Erfindung ist es, eine gattungsgemäße Fahrzeugbremse anzugeben, bei der das Schmutzblech auf einfache Weise und sicher befestigt ist.

Die Lösung der Aufgabe ergibt sich aus dem kennzeichnenden Teil des Patentanspruches 1. Erfindungsgemäß ist der Bremsträger an seinem Umfang mit Taschen versehen, in die das Schmutzblech mit passenden Ausformungen eingreift. Das Schmutzblech ist auf diese Weise mit dem Bremsträger formschlüssig verstemmt, so daß es auch unter Wärmeeinwirkung unlösbar mit dem Bremsträger verbunden bleibt. Neben der sicheren Befestigung des Schmutzbleches hat die erfindungsgemäße Lösung den Vorteil, daß die Fertigungs- und Montagekosten gering bleiben.

In einer bevorzugten Ausführungsform gemäß Anspruch 2 sind drei Taschen vorgesehen, die über den Umfang des Bremsträgers verteilt sind. Diese Anordnung stellt einen guten Kompromiß zwischen der sicheren Befestigung des Schmutzbleches und dem erforderlichen Fertigungsaufwand dar.

Die Taschen werden gemäß Anspruch 3 auf einfache Weise beim Gießen des Bremsträgers angeformt. Dazu ist kein zusätzlicher Arbeitsgang erforderlich.

Ein gemäß Anspruch 4 als einstückiges Stanzteil ausgebildetes Schmutzblech ist besonders einfach zu fertigen. In einer bevorzugten Ausführungsform gemäß Anspruch 5 greift das Schmutzblech sowohl in tangentialer als auch in axialer Richtung formschlüssig in die Taschen des Bremsträgers ein. Der axiale Formschluß sichert das Schutzblech gegen Herunterrutschen vom Bremsträger und der tangentiale Formschluß verhindert ein Verdrehen des Schutzblechs gegenüber dem Bremsträger. Die Verdrehsicherung hat den Vorteil, daß das Schmutzblech gegenüber dem Bremsträger in tangentialer Richtung durch eine Kraft belastet werden kann. Dies ermöglicht beispielsweise eine Anordnung, bei der eine Rückzugfeder für einen Betätigungshebel am Schmutzblech abgestützt ist.

Vorzugsweise werden die Ausformungen gemäß Anspruch 6 beim Verstemmen des Schmutzblechs mit dem Gußträger gebildet.

Mit Anspruch 7 wird auch für ein Verfahren zur Herstellung eines Bremsträgers und eines Schmutzblechs und zur Befestigung des Schmutzblechs am Bremsträger um Schutz ersucht. Gemäß dem erfindungsgemäßen Verfahren wird zunächst ein Bremsträger als einfaches Gußteil und ein Schmutzblech als einfaches Stanzteil hergestellt. Nach dem Aufschieben des Schmutzblechs auf die Umfangsfläche des Bremsträgers wird das Schmutzblech mit dem Bremsträger verstemmt und unlösbar verbunden. Beim Verstemmen werden mittels eines oder mehrerer Stempel im Bund des Schmutzblechs Ausformungen erzeugt, die in die Taschen des Bremsträgers eingreifen.

Vorzugsweise ist der oder die verwendeten Stempel gemäß Anspruch 8 ballig ausgebildet. Ein derartiger Stempel gewährleistet die gleichmäßige Verformung des Schmutzblechs, ohne daß die Gefahr einer Perforation besteht.

Vorzugsweise wird der Stempel gemäß Anspruch 9 in einer Richtung betätigt, die im Winkelbereich zwischen der Radache und einer radialen Richtung liegt und insbesondere mit der radialen Richtung einen Winkel von 40 einschließt. Diese Maßnahme gewährleistet einen Formschluß zwischen dem Schmutzblech und dem Bremsträger, der das Schmutzblech sowohl gegen Abgleiten in axialer Richtung als auch gegen Verdrehen in Umfangsrichtung sichert.

Wenn gemäß Anspruch 10 das Material des Schmutzblechs nur soweit plastisch verformt wird, daß dabei keine Risse entstehen, so bleibt die Wirkung des Schmutzblechs, nämlich das Eindringen von Schmutz oder Spritzwasser zu verhindern, besonders wirkungsvoll erhalten.

Vorzugsweise werden bei dem Verfahren gemäß Anspruch 11 beim Gießen des Bremsträgers drei Taschen angeformt, die auf den Umfang verteilt sind. Durch diese Maßnahme wird wiederum ein guter Kompromiß zwischen einer sicheren Befestigung des Schmutzblechs und einer einfachen Herstellung erzielt.

Ein Ausführungsbeispiel der Erfindung wird nachfolgend anhand der Zeichnungen näher erläutert.

Es zeigen:
- Fig.1: eine Draufsicht auf eine teilweise montierte Fahrzeugbremse mit einem am Bremsträger befestigten Schmutzblech;
- Fig. 2: eine teilweise Draufsicht auf die Rückseite eines Gußteils für einen Bremsträger mit erfindungsgemäßen Taschen;
- Fig. 3: eine Teilansicht eines gemäß Linie A-A von Fig. 1 geschnittenen Schmutzblechs vor der Befestigung am Bremsträger;
- Fig. 4: eine gemäß Linie E-E geschnittene Teilansicht eines am Bremsträger erfindungsgemäß verstemmten Schmutzblechs, in etwa entsprechend dem Ausschnitt B aus Fig. 3 zusammen mit einem Schnitt gemäß Linie D-D aus Fig. 2;
- Fig. 5: eine gemäß Linie C-C von Fig. 1 geschnittene Teilansicht der Fahrzeugbremse.

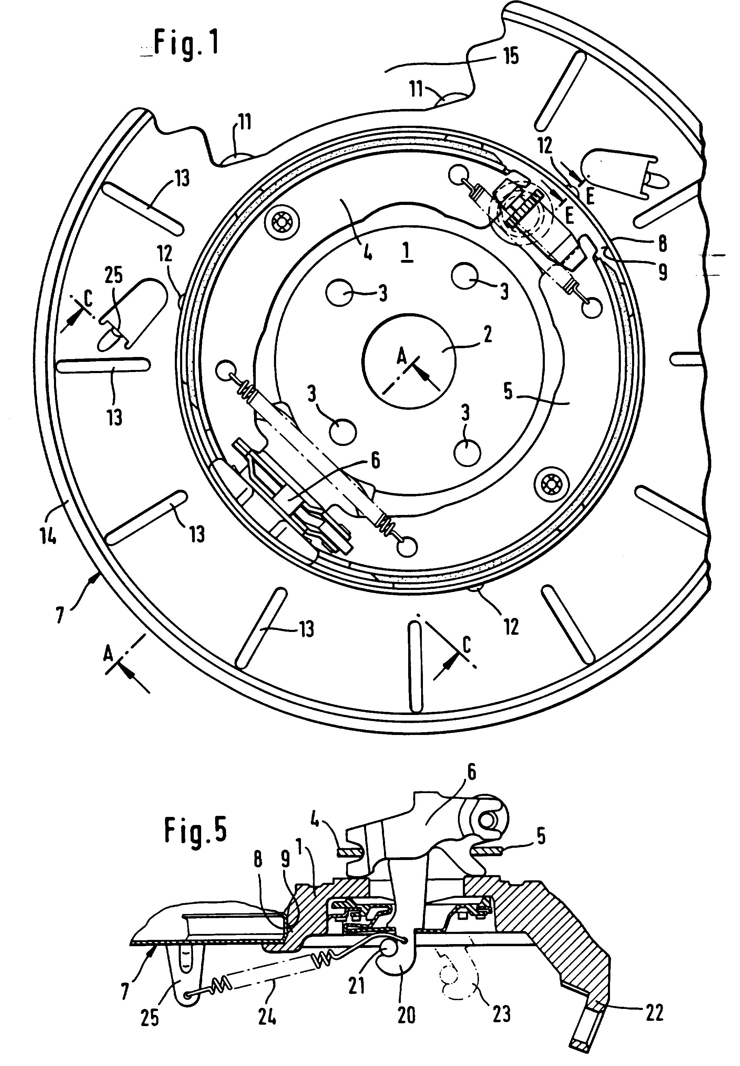

Zur Erleichterung der Übersicht ist in Fig. 1 eine Fahrzeugbremse ohne die dazugehörige Scheibenbremse und ohne die Bremsscheibe dargestellt. Im zentralen Bereich der Bremse ist ein Bremsträger 1 angeordnet, der eine Öffnung 2 zum Durchgang der Radachse des Fahrzeugs und Öffnungen 3 zur Befestigung des Bremsträgers 1 mittels Schrauben am Achschenkel des Fahrzeugs aufweist. Auf dem Bremsträger 1 ist eine als Feststellbremse dienende Trommelbremse montiert, die im wesentlichen aus zwei Bremsbacken 4,5 und einem Spreizschloß 6 besteht. Um den Bremsträger 1 herum ist ein Schmutzblech 7 angeordnet. Das Schmutzblech 7 erstreckt sich neben der nicht gezeigten Bremsscheibe vom Bremsträger 1 ausgehend radial nach außen. Es hat die Aufgabe, das Eindringen von Schmutz oder Spritzwasser in den Innenraum der Trommelbremse zu verhindern.

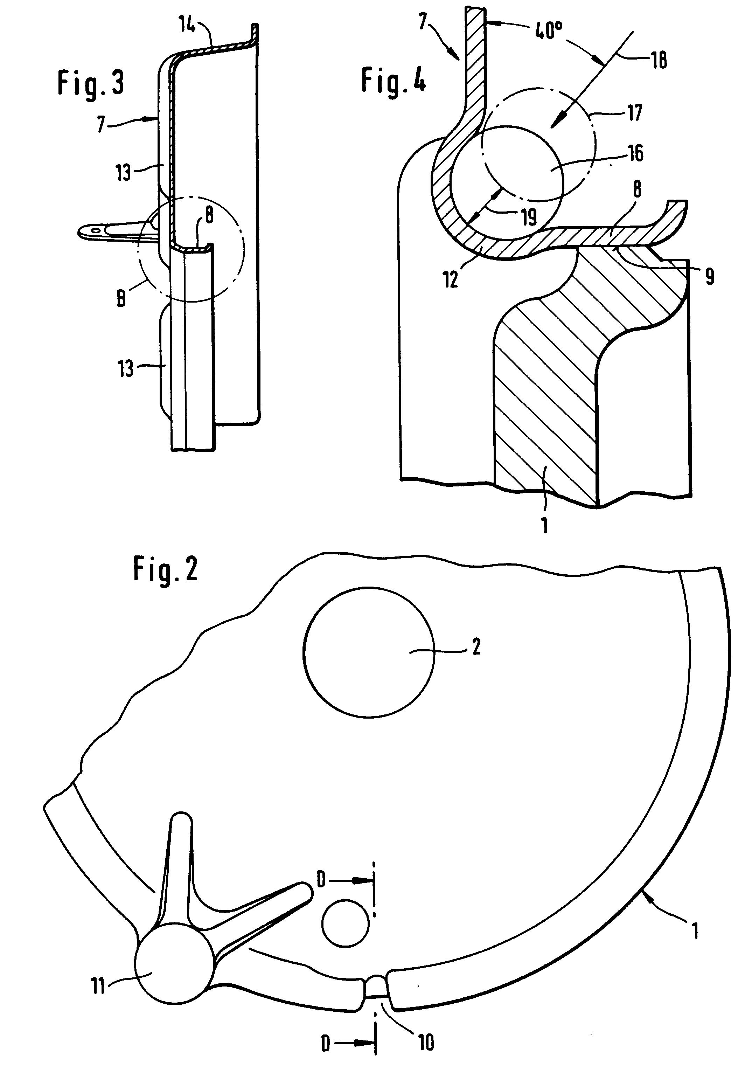

Wie man am besten in Fig. 3 oder 4 erkennt, ist das Schmutzblech 7 an seinem radial inneren Rand mit einem umlaufenden Bund 8 versehen, der an einer radial äußeren Umfangsfläche 9 des Bremsträgers 1 mit Preßsitz anliegt.

Fig. 2 zeigt das Rohgußteil eines Bremsträgers 1 vor der Bearbeitung. Man erkennt die zentrale Öffnung 2 und einen von zwei Vorsprüngen 11, an denen später die Scheibenbremse befestigt wird. Beim Gießen werden an den Bremsträger 1 drei auf seinen Umfang verteilte Taschen 10 gebildet. Das Schmutzblech 7 weist drei zu den Taschen 10 passende Ausformungen 12 auf, die man in Fig. 1 erkennen kann. Die Ausformungen 12 greifen wie in Fig. 4 gezeigt in die Taschen 10 des Bremsträgers 1 formschlüssig ein. Durch den Formschluß wird das Schmutzblech 7 am Bremsträger 1 sowohl gegen Abrutschen in axialer Richtung als auch gegen Verdrehen in Umfangsrichtung gesichert.

Zur Herstellung der erfindungsgemäßen Fahrzeugbremse wird der Bremsträger 1 zusammen mit den Taschen 10 gegossen. Das Schmutzblech 7 wird aus einem Stück Blech gestanzt und geformt. Dabei erhält das Schmutzblech 7 einen radial innen umlaufenden Bund 8, der wie in Fig. 3 gezeigt noch keine Ausformungen 12 aufweist. Die angeformten Rippen 13 erhöhen die Stabilität des Schmutzblechs 7. Der radial außen angeordnete Kragen 14 ist dazu bestimmt, die nicht gezeigte Bremsscheibe zu übergreifen. Die in Fig. 1 sichtbare Aussparung 15 des Schmutzblechs 7 ist für die Montage der Scheibenbremse vorgesehen.

Das Schmutzblech 7 wird nun in axialer Richtung auf den Bremsträger 1 geschoben, so daß der Bund 8 des Schmutzblechs 7 an der Umfangsfläche 9 des Bremsträgers 1 anliegt. Wie in Fig. 4 gezeigt, wird anschließend mittels eines Stempels 16 das Schmutzblech 7 mit dem Bremsträger 1 verstemmt und damit unlösbar verbunden. Dabei werden im Bund 8 des Schmutzblechs 7 die drei Ausformungen 12 erzeugt. Der Stempel 16 ist ballig ausgebildet und besitzt einen kreisrunden Querschnitt. Der Stempel 16 wird aus der durch die Strichelung 17 angedeuteten Position in die Richtung 18 bewegt. Es hat sich als besonders günstig herausgestellt, wenn die Bewegungsrichtung 18 mit einer radialen Richtung einen Winkel von 40° einschließt. Beim Verstemmen ist zu beachten, daß die vom Stempel 16 erzeugte Tiefe 19 der Ausformung 12 begrenzt bleibt, so daß das Material des Schmutzblechs 7 plastisch verformt wird, ohne daß dabei Risse entstehen.

Anhand von Fig. 5 soll erläutert werden, warum das Schmutzblech 7 nicht nur gegen Herunterrutschen in axialer Richtung sondern auch gegen Verdrehen gesichert sein muß. Das zur mechanischen Betätigung der Feststellbremse dienende Spreizschloß 6 weist einen Betätigungshebel 20 auf, der mittels eines nicht gezeigten Seilzugs betätigt wird. Ein an den Bremsträger 1 angegossener Vorsprung 22 dient als Widerlager und zur Befestigung des nicht gezeigten Seilzugs, dessen Bremsseil mit seinem Ende 21 den Hebel 20 umgreift. Während der Betätigung der Trommelbremse schwenkt der Hebel 20 in die durch Strichelung 23 angedeutete Position. Beim Lösen der Feststellbremse wird der Hebel 20 von einer Feder 24 in die Lösestellung zurückgezogen. Die Feder 24 ist mit ihrem einen Ende am Betätigungshebel 20 und mit ihrem anderen Ende an einer Lasche 25 des Schmutzblechs 7 befestigt. Durch die Feder 24 wird das Schmutzblech 7 gegenüber dem Bremsträger 1 vorgespannt. Die am Schmutzblech 7 angreifende Vorspannkraft weist eine Tangentialkomponente auf, die das Schmutzblech 7 gegenüber dem Bremsträger 1 verdrehen könnte, wenn es nicht durch seine mit den Taschen 10 des Bremsträgers verstemmten Ausformungen 12 daran gehindert würde.

## Patentansprüche

1. Fahrzeugbremse mit einem Bremsträger (1), der am Achschenkel eines Fahrzeugs befestigt ist und eine vorzugsweise als Feststellbremse dienende Trommelbremse und eine vorzugsweise als Betriebsbremse dienende Scheibenbremse trägt, mit einem am Bremsträger (1) befestigten Schmutzblech (7), das an seinem radial inneren Rand einen umlaufenden Bund (8) aufweist und das seitlich neben einer Bremsscheibe angeordnet ist und sich radial nach außen erstreckt, um insbesondere das Eindringen von Schmutz oder Spritzwasser in den Innenraum der Trommelbremse zu verhindern, dadurch **gekennzeichnet**, daß der Bund (8) des Schmutzblechs (7), an einer radial äußeren Umfangsfläche (9) des Bremsträgers (1) anliegt, daß der Bremsträger (1) mit Taschen (10) versehen ist, die auf seinem Umfang verteilt sind, und daß das Schmutzblech (7) mit verstemmten Ausformungen (12) versehen ist, die in die Taschen (10) des Bremsträgers (1) formschlüssig eingreifen.

2. Fahrzeugbremse nach Anspruch 1, dadurch **gekennzeichnet**, daß der Bremsträger (1) drei über seinen Umfang verteilte Taschen (10) aufweist.

3. Fahrzeugbremse nach Anspruch 1 oder 2, dadurch **gekennzeichnet**, daß der Bremsträger (1) im wesentlichen aus einem Gußteil besteht und daß die Taschen (10) durch Gießen angeformt sind.

4. Fahrzeugbremse nach einem der vorhergehenden Ansprüche, dadurch **gekennzeichnet**, daß das Schmutzblech (7) als einstückiges Stanzteil ausgebildet ist.

5. Fahrzeugbremse nach einem der vorhergehenden Ansprüche, dadurch **gekennzeichnet**, daß die Ausformungen (12) des Schmutzblechs (7) sowohl in tangentialer als auch in axialer Richtung formschlüssig in die Taschen (10) des Bremsträgers (1) eingreifen.

6. Fahrzeugbremse nach einem der vorhergehenden Ansprüche, dadurch **gekennzeichnet**, daß die Ausformungen (12) durch Verstemmen des Schmutzblechs (7) mit dem Gußträger (1) gebildet sind.

7. Verfahren zur Herstellung eines Bremsträgers (1) und eines Schmutzblechs (7) für eine Fahrzeugbremse und zur Befestigung des Schmutzblechs (7) am Bremsträger (1), gekennzeichnet durch folgende Verfahrensschritte:
- Ein Bremsträger (1), der eine radial äußere Umfangsfläche (9) aufweist, wird gegossen, wobei an den Bremsträger (1) Taschen (10) angeformt werden, die auf seinen Umfang verteilt sind;
- aus einem Stück Blech wird das Schmutzblech (7) ausgestanzt und seinem radial inneren Rand ein umlaufender Bund (8) angeformt;
- das Schmutzblech (7) wird in axialer Richtung auf den Bremsträger (1) geschoben, so daß der Bund (8) des Schmutzblechs (7) an der Umfangsfläche (9) des Bremsträgers (1) anliegt;
- mittels eines oder mehrerer Stempel (16) werden im Bund (8) des Schmutzblechs (7) Ausformungen (12) erzeugt, die in die Taschen (10) des Bremsträgers (1) eingreifen, wobei das Schmutzblech (7) mit dem Bremsträger (1) verstemmt und unlösbar verbunden wird.

8. Verfahren nach Anspruch 7, dadurch **gekennzeichnet**, daß der oder die verwendeten Stempel (16) ballig ausgebildet sind.

9. Verfahren nach Anspruch 7 oder 8, dadurch **gekennzeichnet**, daß die Bewegungsrichtung (18) des Stempels (16) im Winkelbereich zwischen der Radache und einer radialen Richtung liegt, wobei ein Winkel von 40° zur radialen Richtung bevorzugt wird.

10. Verfahren nach einem der Ansprüche 7 bis 9, dadurch **gekennzeichnet**, daß das Material des Schmutzblechs (7) plastisch verformt wird, ohne daß dabei Risse entstehen.

11. Verfahren nach einem der Ansprüche 7 bis 10, dadurch **gekennzeichnet**, daß beim Gießen des Bremsträgers (1) drei Taschen (10) angeformt werden, die auf den Umfang verteilt sind.

## Claims

1. A vehicle brake including a brake carrier (1) fastened to the steering knuckle of a vehicle and carrying a drum brake, which preferably serves as a parking brake, and a disc brake, which preferably serves as a service brake, a mud guard (7) which is fastened to the brake carrier (1), which is arranged laterally beside a brake disc and extends radially outwards, in particular, so as to prevent dirt or splash water from entering the interior space of the drum brake,
**characterized** in that the collar (8) of the mud guard (7) abuts on a radially outside circumferential surface (9) of the brake carrier (1), in that the brake carrier (1) is provided with pockets (10) distributed over its circumference, and in that the mud guard (7) is provided with caulked bulges (12) positively engaging the pockets (10) of the brake carrier (1).

2. A vehicle brake as claimed in claim 1,
**characterized** in that the brake carrier (1) has three pockets (10) distributed over its circumference.

3. A vehicle brake as claimed in claim 1 or in claim 2,
**characterized** in that the brake carrier (1) essentially consists of a casting and in that the pockets (10) are shaped by casting.

4. A vehicle brake as claimed in any one of the preceding claims,
**characterized** in that the mud guard (7) is designed as a one-piece stamped metal part.

5. A vehicle brake as claimed in any one of the preceding claims,
**characterized** in that the bulges (12) of the mud guard (7) positively engage the pockets (10) of the brake carrier (1) both in the tangential and the axial directions.

6. A vehicle brake as claimed in any one of the preceding claims,
**characterized** in that the bulges (12) are formed by caulking the mud guard (7) with the cast carrier (1).

7. A process of manufacturing a brake carrier (1) and a mud guard (7) for a vehicle brake and fastening the mud guard (7) to the brake carrier (1),
**characterized** by the following procedural operations:
- a brake carrier (1) having a radially outside circumferential surface (9) is cast, with pockets (10) being shaped on the brake carrier (1) which are distributed over its circumference;
- the mud guard (7) is punched out of a piece of metal plate, and a circumferential collar (8) is shaped on its radially inward edge;
- the mud guard (7) is slid in the axial direction onto the brake carrier (1) so that the collar (8) of the mud guard (7) rests on the circumferential surface (9) of the brake carrier (1);
- by means of one or a plurality of punches (16), bulges (12) are generated in the collar (8) of the mud guard (7) which engage the pockets (10) of the brake carrier (1), with the mud guard (7) thus being caulked and undetachably connected with the brake carrier (1).

8. A process as claimed in claim 7,
**characterized** in that the punch(es) (16) used feature(s) a spherical design.

9. A process as claimed in claim 7 or in claim 8,
**characterized** in that the direction of motion (18) of the punch (16) lies in the angular area between the wheel axle and a radial direction, with an angle of 40° towards the radial direction being preferred.

10. A process as claimed in any one of claims 7 through 9,
**characterized** in that the material of the mud guard (7) is plastically deformed, without cracks resulting during this operation.

11. A process as claimed in any one of claims 7 through 10,
**characterized** in that three pockets (10) are shaped as the brake carrier (1) is cast, the pockets (10) being distributed over the circumference.

## Revendications

1. Frein pour véhicule, comprenant un support de frein (1), qui est fixé à la fusée d'essieu d'un véhicule et qui porte un frein à tambour, servant de préférence de frein de stationnement, et un frein à disque servant de préférence de frein de service, et, fixée sur le support de frein (1), une tôle de protection (7) qui comporte, sur son bord radialement intérieur, un rebord périphérique (8), la tôle de protection (7) étant disposée latéralement à côté d'un disque de frein et s'étendant radialement vers l'extérieur, afin d'empêcher notamment la pénétration de salissures ou d'eau projetée dans la cavité du frein à tambour, caractérisé en ce que le rebord (8) de la tôle de protection (7) prend appui sur une surface périphérique radialement extérieure (9) du support de frein (1), en ce que le support de frein (1) est pourvu de logements (10) qui sont répartis à sa périphérie et en ce que la tôle de protection (7) est pourvue de partie façonnées (12) qui sont réalisées d'une façon analogue à un matage et qui s'accrochent par complémentarité de formes dans les logements (10) du support de frein (1).

2. Frein pour véhicule selon la revendication 1, caractérisé en ce que le support de frein (1) comporte trois logements (10) répartis à sa périphérie.

3. Frein pour véhicule selon la revendication 1 ou 2, caractérisé en ce que le support de frein (1) est essentiellement constitué d'une pièce moulée par coulée et en ce que les logements (10) sont formés lors du moulage par coulée.

4. Frein pour véhicule selon l'une des revendications précédentes, caractérisé en ce que la tôle de protection (7) est réalisée sous forme d'une seule pièce découpée à la presse.

5. Frein pour véhicule selon l'une des revendications précédentes, caractérisé en ce que les parties façonnées (12) de la tôle de protection (7) s'accrochent par complémentarité de formes dans les logements (10) du support de frein (1) à la fois suivant la direction tangentielle et suivant la direction axiale.

6. Frein pour véhicule selon l'une des revendications précédentes, caractérisé en ce que les parties façonnées (12) sont formées par une opération analogue à un matage de la tôle de protection (7) avec le support moulé par coulée (1).

7. Procédé de fabrication d'un support de frein (1) et d'une tôle de protection (7) destinés à un frein pour véhicule et de fixation de la tôle de protection (7) sur le support de frein (1), caractérisé par les opérations suivantes de procédé :
- on réalise le moulage par coulée d'un support de frein (1) qui comporte une surface périphérique radialement extérieure (9), des logements (10) étant réalisés au formage sur le support de frein (1) en étant répartis à sa périphérie,
- à partir d'un flanc de tôle, on découpe la tôle de protection (7) à la presse et, à partir de son bord radialement intérieur, on réalise au formage un rebord (8) qui en fait le tour,
- on pousse la tôle de protection (7) pardessus le support de frein (1) suivant la direction axiale, d'une façon telle que le rebord (8) de la tôle de protection (7) prent appui sur la surface périphérique (9) du support de frein (1),
- au moyen d'un ou plusieurs outils de refoulement (16), on produit, dans le rebord (8) de la tôle de protection (7), des parties façonnées (12) qui s'accrochent dans les logements (10) du support de frein (1), de sorte que la tôle de protection (7) est rendue solidaire du support de frein (1) d'une manière analogue à un matage et d'une façon imperdable.

8. Procédé selon la revendication 7, caractérisé en ce que le ou les outils de refoulement (16) utilisés sont réalisés avec une forme sphérique.

9. Procédé selon la revendication 7 ou 8, caractérisé en ce que la direction de déplacement (18) de l'organe de refoulement (16) est située dans le domaine angulaire compris entre l'axe de roue et une direction diamétrale, l'angle vis-à-vis de la direction diamétrale étant de préférence égal à 40°.

10. Procédé selon l'une des revendications 7 à 9, caractérisé en ce que la matière de la tôle de protection (7) est déformée plastiquement sans qu'il se produise de ce fait des fissures.

11. Procédé selon l'une des revendications 7 à 10, caractérisé en ce que trois logements (10) qui sont répartis à la périphérie sont formés lors du moulage du support de frein (1) par coulée.
